# EUROPÄISCHE PATENTSCHRIFT

(11) **EP 0 960 174 B1**
(45) Veröffentlichungstag und Bekanntmachung des Hinweises auf die Patenterteilung: **17.04.2002**
(21) Anmeldenummer: 98905337.6
(22) Anmeldetag: 23.01.1998
(51) Int. Cl.: C09D 151/08, C08F 283/00, C09D 17/00

(54) **UNIVERSELL EINSETZBARE PIGMENTPASTEN UND IHRE VERWENDUNG ZUR HERSTELLUNG VON WÄSSRIGEN LACKEN**
UNIVERSAL PIGMENT PASTES AND THEIR USE FOR THE MANUFACTURE OF AQUEOUS PAINTS
PATES PIGMENTAIRES A USAGE UNIVERSEL ET LEUR UTILISATION POUR LA FABRICATION DE PEINTURES AQUEUSES

(30) Priorität: 12.02.1997 DE 19705219
(43) Veröffentlichungstag der Anmeldung: 01.12.1999
(73) Patentinhaber: BASF Coatings AG, 48165 Münster (DE)
(72) Erfinder: FRIELING, Joachim, D-97209 Veitshochheim (DE); KRAEMER, Andreas, D-44143 Dortmund (DE); MAYENFELS, Peter, D-48163 Münster (DE); SIERAKOWSKI, Claudia, D-64347 Griesheim (DE); LETTMANN, Bernhard, D-48317 Drensteinfurt (DE)
(74) Vertreter: Fitzner, Uwe, Dr.
(86) Internationale Anmeldenummer: EP9800356
(87) Internationale Veröffentlichungsnummer: WO9836034

(56) Entgegenhaltungen:
- EP-A- 0 424 705
- EP-A- 0 521 928

## Beschreibung

Gegenstand der vorliegenden Erfindung sind Pigmentpasten, die als Bindemittel mindestens ein Polyurethanacrylat (P) enthalten, das erhältlich ist, indem in einem organischen Lösemittel oder in einem Gemisch organischer Lösemittel
(A) ethylenisch ungesättigte Monomere oder ein Gemisch ethylenisch ungesättigter Monomere in Gegenwart
(B) eines Polyurethanharzes, das ein zahlenmittleres Molekulargewicht von 200 bis 30.000, vorzugsweise 1.000 bis 5.000 aufweist und das im statistischen Mittel pro Molekül 0,05 bis 1,1, vorzugsweise 0,2 bis 0,9, besonders bevorzugt 0,3 bis 0,7 polymerisierbare Doppelbindungen enthält, polymerisiert werden und das so erhaltene Reaktionsprodukt in eine wäßrige Dispersion überführt wird.

Die vorliegende Erfindung betrifft außerdem diese Pigmentpasten enthaltende, wäßrige Lacke sowie Verfahren zum Beschichten von Substraten. Schließlich betrifft die Erfindung auch Mischsysteme unter Verwendung dieser Pigmentpasten.

Die Pigmentierung von wäßrigen Lacken erfolgt durch Zugabe von wäßrigen Pigmentkonzentraten, sogenannten Pigmentpasten, zu den übrigen Lackbestandteilen.

Pigmentpasten bestehen üblicherweise aus Wasser, mindestens einem Pigment, mindestens einem wasserverdünnbaren Bindemittel sowie ggf. organischen Lösemitteln, Netzmitteln und anderen für Pigmentpasten üblichen Zusätzen (vgl. Volker Radke in "Pigmente für Anstrichmittel", Technische Akademie Esslingen, Kap. 7, Dispergierung von Pigmenten, Export-Verlag, 1990).

Damit diese Pigmentpasten möglichst universell einsetzbar sind und so die kostengünstige Herstellung einer Vielzahl zum Teil recht unterschiedlicher Lacke ermöglichen, sollten diese Pigmentpasten möglichst hoch pigmentiert sein. Dies wiederum führt jedoch in der Regel zu einer Vielzahl von Problemen, wie beispielsweise einer hohen Viskosität der Pigmentpasten, einer unzureichenden Lagerstabilität der Pigmentpasten (gewünscht ist in der Regel eine Lagerstabilität der Pigmentpasten von mindestens 6 Monaten bei Lagerung bei Raumtemperatur oder von 1 Monat bei Lagerung bei 40 °C) oder einer schlechten Dispergierbarkeit (d.h. es ist ein hoher spezifischer Energieeintrag zur Dispergierung erforderlich oder es tritt Eindicken der Pigmentpaste während des Dispergiervorgangs ein oder es besteht eine Absetzneigung nach dem Dissolvern).

Aus der EP-B-521 928 sind nun bereits Polyurethanacrylate (P) der eingangs genannten Art sowie ihre Verwendung zur Herstellung von Pigmentpasten bekannt. In der EP-B-521 928 ist dabei jedoch lediglich die Herstellung von 3 verschiedenen Basislacken unter Verwendung 2 verschiedener Weißpasten sowie einer Ruß enthaltenden Pigmentpaste beschrieben. Andere Pigmentpasten sind in der EP-B-521 928 nicht beschrieben.

Ferner sind aus der EP-B-297 576 wäßrige Polyurethanharz-Dispersionen bekannt, die erhältlich sind, indem in Wasser ethylenisch ungesättigte Verbindungen in Gegenwart eines doppelbindungsfreien Polyurethanharzes polymerisiert werden. Diese Polyurethanharz-Dispersionen können ebenfalls, ggf. zusammen mit anderen Anreibeharzen, zum Anreiben von Pigmenten zur Herstellung von wäßrigen Lacken eingesetzt werden. Bevorzugt werden in der EP-B-297 576 jedoch nicht in Gegenwart von Polyurethanen hergestellte, hydroxylgruppenhaltige Acrylatcopolymerisate als Pastenharze eingesetzt. Ferner ist auch die Herstellung universell einsetzbarer Pigmentpasten in der EP-B-297 576 nicht beschrieben.

Ferner sind aus der EP-B-438 090 Pigmentpasten und ihre Verwendung in wäßrigen Lacken bekannt, wobei diese Pigmentpasten als Anreibebindemittel ein Polyesterurethan enthalten. Die Verwendung von Urethanacrylaten als Anreibebindemittel ist dagegen in der EP-B-438 090 nicht beschrieben. Diese aus der EP-B-438 090 bekannten Pigmentpasten weisen den Nachteil auf, daß die Stabilität hoch pigmentierter Pasten in bezug auf Viskosität, Farbstärke und Farbtonstabilität bei Lagerung der Pigmentpasten verbesserungsbedürftig ist.

Im Vergleich zu den aus dieser EP-B-438 090 bekannten Pasten sollten die Pigmentpasten der vorliegenden Anmeldung trotz des hohen Pigmentgehaltes bei Lagerung der Pasten 6 Monate bei Raumtemperatur nahezu viskositätsstabil sein, d.h. die Viskosität der Pasten bleibt nach Lagerung im Bereich zwischen 50 und 1.000 mPa.s bei einer Scherbeanspruchung von 1000 s ⁻¹. Ferner sollten die Pigmentpasten der vorliegenden Anmeldung trotz des hohen Pigmentgehaltes bei Lagerung der Pasten 6 Monate bei Raumtemperatur bezüglich der Farbstärke und des Farbtons (± 10%, ΔE ≤ 1,5) stabil bleiben.

Weiterhin sind aus der EP-A-424 705 Pigmentpasten bekannt, die als Anreibebindemittel eine nichtionisch oder teilweise anionisch stabilisierte Dispersion eines Acrylät/Polyurethan-Pfropfcopolymers enthalten. Diese aus der EP-A-424 705 bekannten Pigmentpasten unterscheiden sich von den Pigmentpasten der vorliegenden Anmeldung dadurch, daß diese dort beschriebenen Pigmentpasten ein niedriges Pigment/Bindemittel-Verhältnis aufweisen und lange Mahldauern bzw. einen hohen spezifischen Energieeintrag erfordern (> 1.000 Wh/kg).

Schließlich sind aus der EP-A-311 209 universell einsetzbare Pigmentpasten sowie ihre Verwendung in Mischsystemen zur Herstellung wäßriger und konventioneller Lacke bekannt. Diese dort beschriebenen und zur Herstellung wäßriger Lacke eingesetzten Pigmentpasten enthalten 0 bis 65 Gew.-% Bindemittel, 10 bis 65 Gew. -% Pigment sowie organische Lösemittel und ggf. weitere Additive. Als Bindemittel für die Pigmentpasten werden in der EP-A-311 209 Alkydharze und Polyurethanharze genannt. Die Verwendung von Urethanacrylaten ist dagegen in der EP-A-311 209 nicht beschrieben. Die in der EP-A-311 209 beschriebenen Pigmentpasten weisen den Nachteil eines hohen flüchtigen organischen Anteils (VOC) auf.

Der vorliegenden Erfindung liegt somit die Aufgabe zugrunde, wäßrige Pigmentpasten zur Verfügung zu stellen, die universell einsetzbar sind und einfach sowie kostengünstig herstellbar sind. Ferner sollten diese Pigmentpasten die üblicherweise gestellten Anforderungen erfüllen. Sie sollten daher insbesondere eine hohe Pigmentierungshöhe aufweisen und dabei gleichzeitig eine ausreichende Lagerstabilität (mindestens 6 Monate bei Lagerung bei Raumtemperatur bzw. 1 Monat bei Lagerung bei 40 °C), eine gute Dispergierbarkeit (d.h. z.B. erforderlicher spezifischer Energieeintrag 50 - 1.000 Wh/kg) sowie eine gute Verarbeitbarkeit (z.B. Pumpbarkeit) aufweisen. Ferner sollten die Pigmentpasten eine gute Auflackbarkeit und Coloristik zeigen. Schließlich sollten die Pigmentpasten eine hohe coloristische Sättigung, eine gute Farbstärke bzw. gutes Deckvermögen und ein gutes Fließverhalten besitzen.

Diese Aufgabe wird überraschenderweise durch Pigmentpasten der eingangs genannten Art gelöst, die dadurch gekennzeichnet sind, daß sie
- (Pa): 10 bis 35 Gew.-% mindestens eines Polyurethanacrylatharzes (P), bezogen auf den Festkörpergehalt,
- (Pb): 10 bis 65 Gew.-% Wasser und
- (Pc1): 18 bis 40 Gew.-% mindestens eines organischen, transparenten Pigmentes oder 30 bis 50 Gew.-% mindestens eines organischen, deckenden Pigmentes oder
- (Pc2): 30 bis 80 Gew.-% mindestens eines anorganischen Pigmentes, ausgenommen Weißpigmente, oder mehr als 50 bis 70 Gew.-% Weißpigment oder
- (Pc3): mehr als 8 bis 15 Gew.-% Ruß
enthalten, wobei die Gewichtsanteile der jeweiligen Komponenten (Pa) bis (Pc) jeweils auf das Gesamtgewicht der Pigmentpaste bezogen sind.

Gegenstand der vorliegenden Erfindung sind außerdem diese Pigmentpasten enthaltende, wäßrige Lacke sowie Verfahren zum Beschichten von Substraten unter Verwendung dieser Lacke. Schließlich betrifft die Erfindung auch Mischsysteme auf Basis dieser Pigmentpasten.

Es ist überraschend und war nicht vorhersehbar, daß unter Verwendung der Polyurethanacrylate (P) sehr hoch pigmentierte und dabei doch lagerstabile, leicht verarbeitbare Pigmentpasten herstellbar sind, die die üblicherweise gestellten Anforderungen an Pigmentpasten erfüllen. So war es nicht vorhersehbar, daß i.a. sogar mit einer Pigmentierungshöhe in der Nähe der kritischen Pigment-Volumen-Konzentration (KPVK) gearbeitet werden kann. Bevorzugt liegt die Pigmentierungshöhe dabei im allgemeinen etwa 3 bis 10 %, besonders bevorzugt 5 bis 7 %, unter der KPVK.

Überraschenderweise sind die erfindungsgemäßen Pigmentpasten trotz des hohen Pigmentgehaltes auch nach Lagerung sowohl nahezu viskositätsstabil (d.h. die Viskosität bleibt auch nach Lagerung 6 Monate bei Raumtemperatur bei 50 bis 1.000 mPa.s bei einer Schergeschwindigkeit von 1.000 s⁻¹) als auch bezüglich der Farbstärke und bezüglich des Farbtons stabil ( d.h. Farbstärke ± 10%, ΔE ≤ 1,5).

Vorteilhaft ist schließlich auch, daß trotz der hohen Pigmentierung keine Dispergierprobleme auftreten. So reicht beispielsweise zur Dispergierung i.a. bereits ein Energieeintrag von 50 - 1.000 Wh/kg, bevorzugt 100 - 400 Wh/kg, aus. Ferner treten auch beispielsweise i.a. keine Probleme, wie z.B. Eindicken beim Mahlvorgang oder Absetzen nach dem Dissolvern, auf.

Im folgenden werden nun zunächst die einzelnen Bestandteile der erfindungsgemäßen Pigmentpaste näher erläutert.

Die als Bindemittel in den erfindungsgemäßen Pigmentpasten eingesetzten Polyurethanacrylate (P) sind bekannt und beispielsweise in der EP-B-521 928 auf Seite 2, Zeile 56, bis Seite 8, Zeile 16, beschrieben. Wegen Einzelheiten bezüglich der Herstellung dieser Polyurethanacrylate sei daher auf diese Beschreibung in der EP-B-521 928 verwiesen.

Zur Herstellung der erfindungsgemäß eingesetzten Bindemittel (P) wird in einem ersten Schritt nach gut bekannten Methoden der Polyurethanchemie ein Polyurethanharz (B) hergestellt. Das Polyurethanharz wird aus folgenden Komponenten hergestellt:
(a) einem Polyester- und/oder Polyetherpolyol mit einem zahlenmittleren Molekulargewicht von 400 bis 5.000 oder einem Gemisch aus solchen Polyester- und/oder Polyetherpolyolen,
(b) einem Polyisocyanat oder einem Gemisch aus Polyisocyanaten,
(c) gegebenenfalls einer Verbindung, die neben einer polymerisierbaren Doppelbindung mindestens noch eine gegenüber NCO-Gruppen reaktive Gruppe enthält oder einem Gemisch aus solchen Verbindungen,
(d) gegebenenfalls einer Verbindung, die mindestens eine gegenüber Isocyanatgruppen reaktive und mindestens eine zur Anionenbildung befähigte Gruppe im Molekül aufweist oder einem Gemisch aus solchen Verbindungen,
(e) gegebenenfalls einer Verbindung, die mindestens eine gegenüber NCO-Gruppen reaktive Gruppe und mindestens eine Poly(oxyalkylen)gruppe im Molekül aufweist, oder einem Gemisch aus solchen Verbindungen und gegebenenfalls
(f) einer Hydroxyl- und/oder Aminogruppen enthaltenden organischen Verbindung mit einem Molekulargewicht von 60 bis 600 oder ein Gemisch aus solchen Verbindungen.

Das Polyurethanharz (B) weist ein zahlenmittleres Molekulargewicht von 200 bis 30.000, vorzugsweise 1.000 bis 5.000 und im statistischen Mittel pro Molekül 0,05 bis 1,1, vorzugsweise 0,2 bis 0,9, besonders bevorzugt 0,3 bis 0,7 polymerisierbare Doppelbindungen auf. Es ist bevorzugt, daß das Polyurethanharz (B) eine Säurezahl von 0 bis 2,0 aufweist. Das Molekulargewicht der Polyurethanharze kann - wie dem Fachmann bekannt - insbesondere durch das Mengenverhältnis und die Funktionalität der eingesetzten Ausgangsverbindungen (a) bis (f) gesteuert werden.

Die Polyurethanharze (B) können sowohl in Substanz als auch in organischen Lösemitteln hergestellt werden.

Die Polyurethanharze (B) können durch gleichzeitige Umsetzung aller Ausgangsverbindungen hergestellt werden. In vielen Fällen ist es jedoch zweckmäßig, die Polyurethanharze stufenweise herzustellen. So ist es zum Beispiel möglich, aus den Komponenten (a) und (b) ein isocyanatgruppenhaltiges Präpolymer herzustellen, das dann mit der Komponente (c) weiter umgesetzt wird. Weiter ist es möglich, aus den Komponenten (a), (b), (c) und gegebenenfalls (d) und (e) ein isocyanatgruppenhaltiges Präpolymer herzustellen, das dann mit der Komponente (f) zu höhermolekularen Polyurethanen umgesetzt werden kann. In den Fällen, in denen als Komponente (c) eine Verbindung eingesetzt wird, die nur eine gegenüber Isocyanatgruppen reaktive Gruppe enthält, kann in einer ersten Stufe aus (b) und (c) ein isocyanatgruppenhaltiges Vorprodukt hergestellt werden, das anschließend mit den weiteren Komponenten weiter umgesetzt werden kann.

Die Umsetzung der Komponenten (a) bis (f) wird zweckmäßigerweise in Gegenwart von Katalysatoren wie z.B. Dibutylzinndilaurat, Dibutylzinnmaleat, tertiäre Amine usw. durchgeführt.

Die einzusetzenden Mengen an Komponente (a), (b), (c), (d), (e) und (f) ergeben sich aus dem anzustrebenden zahlenmittleren Molekulargewicht und der anzustrebenden Säurezahl. Die polymerisierbaren Doppelbindungen können durch Einsatz von polymerisierbare Doppelbindungen aufweisenden (a) Komponenten und/oder durch die Komponente (c) in die Polyurethanmoleküle eingeführt werden. Es ist bevorzugt, die polymerisierbaren Doppelbindungen über die Komponente (c) einzuführen.

Als Komponente (a) können gesättigte und ungesättigte Polyester- und/oder Polyetherpolyole, insbesondere Polyester- und/oder Polyetherdiole, mit einem zahlenmittleren Molekulargewicht von 400 bis 5000 eingesetzt werden. Geeignete Polyetherdiole sind z.B. Polyetherdiole der allgemeinen Formel H(-0-(CHR¹)ₙ-)ₘOH, wobei R¹ = Wasserstoff oder ein niedriger, gegebenenfalls substituierter Alkylrest ist, n = 2 bis 6, bevorzugt 3 bis 4 und m = 2 bis 100, bevorzugt 5 bis 50 ist. Als Beispiele werden lineare oder verzweigte Polyetherdiole wie Poly(oxyethylen)glykole, Poly(oxypropylen)glykole und Poly(oxybutylen)glykole genannt.

Die ausgewählten Polyetherdiole sollen keine übermäßigen Mengen an Ethergruppen einbringen, weil sonst die gebildeten Polymere in Wasser anquellen. Die bevorzugten Polyetherdiole sind Poly(oxypropylen)glykole im Molmassenbereich Mₙ von 400 bis 3000.

Polyesterdiole werden durch Veresterung von organischen Dicarbonsäuren oder ihren Anhydriden mit organischen Diolen hergestellt oder leiten sich von einer Hydroxycarbonsäure oder einem Lacton ab. Um verzweigte Polyesterpolyole herzustellen, können in geringem Umfang Polyole oder Polycarbonsäure mit einer höheren Wertigkeit eingesetzt werden. Die Dicarbonsäuren und Diole können lineare oder verzweigte aliphatische, cycloaliphatische oder aromatische Dicarbonsäuren oder Diole sein.

Die zur Herstellung der Polyester verwendeten Diole bestehen beispielsweise aus Alkylenglykolen, wie Ethylenglykol, Propylenglykol, Butylenglykol, Butandiol-1,4, Hexandiol-1,6, Neopentylglykol und anderen Diolen, wie Dimethylolcyclohexan. Es können jedoch auch kleine Mengen an Polyolen, wie Trimethylolpropan, Glycerin, Pentaerythrit, zugesetzt werden.

Die Säurekomponente des Polyesters besteht in erster Linie aus niedermolekularen Dicarbonsäuren oder ihren Anhydriden mit 2 bis 44, bevorzugt 4 bis 36 Kohlenstoffatomen im Molekül. Geeignete Säuren sind beispielsweise o-Phthalsäure, Isophthalsäure, Terephthalsäure, Tetrahydrophthalsäure, Cyclohexandicarbonsäure, Bernsteinsäure, Adipinsäure, Azelainsäure, Sebazinsäure, Maleinsäure, Fumarsäure, Glutarsäure, Hexachlorheptandicarbonsäure, Tetrachlcrphthalsäure und/oder dimerisierte Fettsäuren. Anstelle dieser Säuren können auch ihre Anhydride, soweit diese existieren, verwendet werden. Bei der Bildung von Polyesterpolyolen können auch kleinere Mengen an Carbonsäuren mit 3 oder mehr Carboxylgruppen, beispielsweise Trimellithsäureanhydrid oder das Addukt von Maleinsäureanhydrid an ungesättigte Fettsäuren, anwesend sein.

Es können auch Polyesterdiole eingesetzt werden, die durch Umsetzung eines Lactons mit einem Diol erhalten werden. Sie zeichnen sich durch die Gegenwart von endständigen Hydroxylgruppen und wiederkehrenden Polyesteranteilen der Formel (-CO-(CHR²)ₙ-CH₂-0) aus. Hierbei ist n bevorzugt 4 bis 6 und der Substituent R² = Wasserstoff, ein Alkyl-, Cycloalkyl- oder Alkoxy-Rest. Kein Substituent enthält mehr als 12 Kohlenstoffatome. Die gesamte Anzahl der Kohlenstoffatome im Substituenten übersteigt 12 pro Lactonring nicht. Beispiele hierfür sind Hydroxycapronsäure, Hydroxybuttersäure, Hydroxydecansäure und/oder Hydroxystearinsäure.

Für die Herstellung der Polyesterdiole wird das unsubstituierte ε-Caprolacton, bei dem n den Wert 4 hat und alle R²-Substituenten Wasserstoff sind, bevorzugt. Die Umsetzung mit Lacton wird durch niedermolekulare Polyole wie Ethylenglykol, 1,3-Propandiol, 1,4-Butandiol, Dimethylolcyclohexan gestartet. Es können jedoch auch andere Reaktionskomponenten, wie Ethylendiamin, Alkyldialkanolamine oder auch Harnstoff mit Caprolacton umgesetzt werden. Als höhenmolekulare Diole eignen sich auch Polylactamdiole, die durch Reaktion von beispielsweise ε-Caprolactam mit niedermolekularen Diolen hergestellt werden.

Wenn über die Komponente (a) polymerisierbare Doppelbindungen in die Polyurethanmoleküle eingeführt werden sollen, dann müssen (a) Komponenten eingesetzt werden, die polymerisierbare Doppelbindungen enthalten. Als Beispiele für solche (a) Komponenten werden Polyesterpolyole, vorzugsweise Polyesterdiole genannt, die unter Verwendung von polymerisierbare Doppelbindungen enthaltenden Polyolen und/oder Polycarbonsäuren hergestellt worden sind. Als Beispiele für polymerisierbare Doppelbindungen enthaltende Polyole werden genannt: Trimethylolpropanmonoallylether, Glycerinmonoallylether, Pentaerythritmono- und Pentaerythritdiallylether. Als Beispiele für polymerisierbare Doppelbindungen enthaltende Polycarbonsäuren werden Alkendicarbonsäuren, Maleinsäure und ungesättigte dimerisierte Fettsäuren genannt.

Als Komponente (b) können aliphatische und/oder cycloaliphatische und/oder aromatische Polyisocyanate eingesetzt werden. Als Beispiele für aromatische Polyisocyanate werden Phenylendiisocyanat, Toluylendiisocyanat, Xylylendiisocyanat, Biphenylendiisocyanat, Naphtylendiisocyanat und Diphenylmethandiisocyanat genannt.

Aufgrund ihrer guten Beständigkeit gegenüber ultraviolettem Licht ergeben (cyclo)aliphatische Polyisocyanate Produkte mit geringer Vergilbungsneigung. Beispiele für cycloaliphatische Polyisocyanate sind Isophorondiisocyanat, Cyclopentylendiisocyanat sowie die Hydrierungsprodukte der aromatischen Diisocyanate wie Cyclohexylendiisocyanat, Methylcyclohexylendiisocyanat und Dicyclohexylmethandiisocyanat. Aliphatische Diisocyanate sind Verbindungen der Formel

OCN-(CR³ ₂)r-NCO

worin r eine ganze Zahl von 2 bis 20, insbesondere 6 bis 8 ist und R³, das gleich oder verschieden sein kann, Wasserstoff oder einen niedrigen Alkylrest mit 1 bis 8 C-Atomen, vorzugsweise 1 oder 2 C-Atomen darstellt. Beispiele hierfür sind Trimethylendiisocyanat, Tetramethylendiisocyanat, Pentamethylendiisocyanat, Hexamethylendiisocyanat, Propylendiisocyanat, Ethylethylendiisocyanat, Dimethylethyldiisocyanat, Methyltrimethylendiisocyanat und Trimethylhexandiisocyanat.

Als weitere Beispiele für geeignete Diisocyanate seien Diisocyanate der allgemeinen Formel (III') 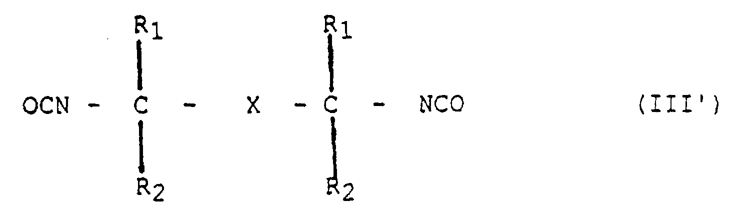 genannt, wobei X für einen zweiwertigen, aromatischen Kohlenwasserstoffrest, vorzugsweise für einen ggf. Halogen- Methyl- oder Methoxy-substituierten Naphthylen-, Diphenylen- oder 1,2-, 1,3- oder 1,4-Phenylenrest, besonders bevorzugt für einen 1,3-Phenylenrest und R₁ und R₂ für einen Alkylrest mit 1 - 4 C-Atomen, bevorzugt für einen Methylrest, stehen. Diisocyanate der Formel (III') sind bekannt (ihre Herstellung wird beispielsweise in der EP-A-101 832, US-PS-3,290,350, US-PS-4,130,577 und der US-PS-4,439,616 beschrieben) und zum Teil im Handel erhältlich (1,3-Bis-(2-isocyanatoprop-2-yl)-benzol wird beispielsweise von der American Cynamid Company unter dem Handelsnamen TMXDI (META)® verkauft).

Weiterhin als Diisocyanatkomponente sind Diisocyanate der Formel (IV') geeignet: 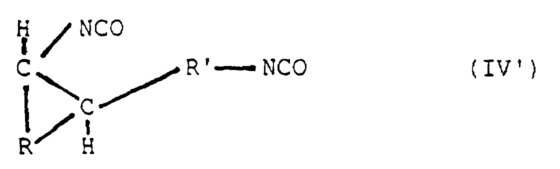 wobei R für einen zweiwertigen Alkyl- oder Aralkylrest mit 3 bis 20 Kohlenstoffatomen und R' für einen zweiwertigen Alkyl- oder Aralkylrest mit 1 bis 20 Kohlenstoffatomen steht.

Besonders bevorzugt werden als Diisocyanate Isophorondiisocyanat und Dicyclohexylmethandiisocyanat genannt.

Die Komponente (b) muß hinsichtlich der Funktionalität der Polyisocyanate so zusammengesetzt sein, daß kein vernetztes Polyurethanharz erhalten wird. Die Komponente (b) kann neben Diisocyanaten auch einen Anteil an Polyisocyanaten mit Funktionalitäten über zwei - wie z.B. Triisocyanate - enthalten.

Als Triisocyanate haben sich Produkte bewährt, die durch Trimerisation oder Oligomerisation von Diisocyanaten oder durch Reaktion von Diisocyanaten mit polyfunktionellen OH- oder NH-Gruppen enthaltenden Verbindungen entstehen. Hierzu gehören beispielsweise das Biuret von Hexamethylendiisocyanat und Wasser, das Isocyanurat des Hexamethylendiisocyanats oder das Addukt von Isophorondiisocyanat an Trimethylolpropan. Die mittlere Funktionalität kann gegebenenfalls durch Zusatz von Monoisocyanaten gesenkt werden. Beispiele für solche kettenabbrechenden Monoisocyanate sind Phenylisocyanat, Cyclohexylisocyanat und Stearylisocyanat.

Die Komponente (c) dient zur Einführung von polymerisierbaren Doppelbindungen in die Polyurethanharzmoleküle. Es ist bevorzugt, als Komponente (c) eine Verbindung einzusetzen, die mindestens zwei gegenüber NCO-Gruppen reaktive Gruppen und eine polymerisierbare Doppelbindung enthält. Besonders bevorzugt werden als Komponente (c) Verbindungen eingesetzt, die neben einer polymerisierbaren Doppelbindung noch zwei gegenüber NCO-Gruppen reaktive Gruppen enthalten. Als Beispiele für gegenüber NCO-Gruppen reaktive Gruppen werden -OH, -SH, > NH und -NH₂-Gruppen genannt, wobei -OH, > NH und -NH₂-Gruppen bevorzugt sind.

Als Beispiele für Verbindungen, die als Komponente(c) eingesetzt werden können, werden genannt: Hydroxy(meth)acrylate, insbesondere Hydroxyalkyl(meth)acrylate wie Hydroxyethyl-, Hydroxypropyl-, Hydroxybutyl- oder Hydroxyhexyl(meth)acrylat und 2,3-Dihydroxypropyl(meth)acrylat, 2,3-Dihydroxypropylmonoallylether, 2,3-Dihydroxypropansäureallylester, Glycerinmono(meth)-acrylat, Glycerinmonoallylether, Pentaerythritmono(meth)acrylat, Pentaerythritdi(meth)acrylat, Pentaerythritmonoallylether, Pentaerythritdiallylether, Trimethylolpropanmonoallylether, Trimethylpropanmono(meth)-acrylat und Trimethylolpropandiallylether. Als Komponente (c) wird vorzugsweise Trimethylolpropanmonoallylether, Glycerinmono(meth)acrylat, 2,3-Dihydroxypropansäureallylester, Pentaerythritdi(meth)acrylat, Pentaerythritdiallylether, Glycerinmonoallylether und Trimethylolpropanmono(meth)acrylat eingesetzt. Es ist bevorzugt, die (c) Komponenten, die mindestens zwei gegenüber NCO-Gruppen reaktive Gruppen enthalten, kettenständig (nicht endständig) in die Polyurethanmoleküle einzubauen.

Die Einführung von zur Anionenbildung befähigten Gruppen in die Polyurethanmoleküle erfolgt über den Einbau von Verbindungen (d) in die Polyurethanmoleküle, die mindestens eine gegenüber Isocyanatgruppen reaktive und eine zur Anionenbildung befähigte Gruppe im Molekül enthalten.

Die Menge an einzuzusetzender Komponente (d) kann aus der angestrebten Säurezahl berechnet werden.

Als Komponente (d) werden vorzugsweise Verbindungen eingesetzt, die zwei gegenüber Isocyanatgruppen reaktive Gruppen im Molekül enthalten. Geeignete gegenüber Isocyanatgruppen reaktive Gruppen sind insbesondere Hydroxylgruppen, sowie primäre und/oder sekundäre Aminogruppen. Geeignete zur Anionenbildung befähigte Gruppen sind Carboxyl-, Sulfonsäure- und/oder Phosphonsäuregruppen, wobei Carboxylgruppen bevorzugt sind. Als Komponente (d) können beispielsweise Alkansäuren mit zwei Substituenten am α-ständigem Kohlenstoffatom eingesetzt werden. Der Substituent kann eine Hydroxylgruppe, eine Alkylgruppe oder bevorzugt eine Alkylolgruppe sein. Diese Alkansäuren haben mindestens eine, im allgemeinen 1 bis 3 Carboxylgruppen im Molekül. Sie haben zwei bis etwa 25, vorzugsweise 3 bis 10 Kohlenstoffatome. Beispiele für die Komponente (d) sind Dihydroxypropionsäure, Dihydroxybernsteinsäure und Dihydroxybenzoesäure. Eine besonders bevorzugte Gruppe von Alkansäuren sind die α,α-Dimethylolalkansäuren der allgemeinen Formel

R⁴-C(CH₂OH)₂COOH,

wobei R⁴ für ein Wasserstoffatom oder eine Alkylgruppe mit bis zu etwa 20 Kohlenstoffatomen steht.

Beispiele für solche Verbindungen sind 2,2-Dimethylolessigsäure, 2,2-Dimethylolpropionsäure, 2,2-Dimethylolbuttersäure und 2,2-Dimethylolpentansäure. Die bevorzugte Dihydroxyalkansäure ist 2,2-Dimethylolpropionsäure. Aminogruppenhaltige Verbindungen sind beispielsweise α,δ-Diaminovaleriansäure, 3,4-Diaminobenzoesäure, 2,4-Diaminotoluolsulfonsäure und 2,4-Diamino-diphenylethersulfonsäure.

Mit Hilfe der Komponente (e) können Poly(oxyalkylen)-gruppen als nichtionische stabilisierende Gruppen in die Polyurethanmoleküle eingeführt werden. Als Komponente (e) können beispielsweise eingesetzt werden Alkoxypoly(oxyalkylen)alkohole mit der allgemeinen Formel R'0-(-CH₂-CHR"-0-)ₙ H, in der R' für einen Alkylrest mit 1 bis 6 Kohlenstoffatomen, R" für ein Wasserstoffatom oder einen Alkylrest mit 1 bis 6 Kohlenstoffatomen und n für eine Zahl zwischen 20 und 75 steht.

Der Einsatz der Komponente (f) führt zur Molekulargewichtserhöhung der Polyurethanharze. Als Komponente (f) können beispielsweise Polyole mit bis zu 36 Kohlenstoffatomen je Molekül wie Ethylenglykol, Diethylenglykol, Triethylenglykol, 1,2-Propandiol, 1,3-Propandiol, 1,4-Butandiol, 1,2-Butylenglykol, 1,6-Hexandiol, Trimethylolpropan, Ricinusöl oder hydriertes Ricinusöl, Ditrimethylolpropanether, Pentaerythrit, 1,2-Cyclohexandiol, 1,4-Cyclohexandimethanol, Bisphenol A, Bisphenol F, Neopentylglykol, Hydroxypivalinsäureneopentylglykolester, hydroxyethyliertes oder hydroxypropyliertes Bisphenol A, hydriertes Bisphenol A und deren Mischungen eingesetzt werden. Die Polyole werden im allgemeinen in Mengen von bis zu 30 Gewichtsprozent, vorzugsweise 2 bis 20 Gewichtsprozent, bezogen auf die eingesetzte Menge an Komponente (a) und (f) eingesetzt.

Als Komponente (f) können auch Di- und/oder Polyamine mit primären und/oder sekundären Aminogruppen eingesetzt werden. Polyamine sind im wesentlichen Alkylen-Polyamine mit 1 bis 40 Kohlenstoffatomen, vorzugsweise etwa 2 bis 15 Kohlenstoffatomen. Sie können Substituenten tragen, die keine mit Isocyanat-Gruppen reaktionsfähige Wasserstoffatome haben. Beispiele sind Polyamine mit linearer oder verzweigter aliphatischer, cycloaliphatischer oder aromatischer Struktur und wenigstens zwei primären Aminogruppen. Als Diamine sind zu nennen Hydrazin, Ethylendiamin, Propylendiamin, 1,4-Butylendiamin, Piperazin, 1,4-Cyclohexyldimethylamin, Hexamethylendiamin-1,6, Trimethylhexamethylendiamin, Menthandiamin, Isophorondiamin, 4,4'-Diaminodicyclohexylmethan und Aminoethylethanolamin. Bevorzugte Diamine sind Hydrazin, Alkyl- oder Cycloalkyldiamine wie Propylendiamin und 1-Amino-3-aminomethyl-3,5,5-trimethylcyclohexan. Es können auch Polyamine als Komponente (f) eingesetzt werden, die mehr als zwei Aminogruppen im Molekül enthalten. In diesen Fällen ist jedoch - z.B. durch Mitverwendung von Monoaminen - darauf zu achten, daß keine vernetzten Polyurethanharze erhalten werden. Solche brauchbaren Polyamine sind Diethylentriamin, Triethylentetramin, Dipropylendiamin und Dibutylentriamin. Als Beispiel für ein Monoamin wird Ethylhexylamin genannt.

Die erfindungsgemäß eingesetzten Bindemittel werden hergestellt, indem eine Lösung des Polyurethanharzes (B) in einem organischen Lösemittel bzw. einem organischen Lösemittelgemisch bereitgestellt wird und in dieser Lösung ethylenisch ungesättigte Monomere oder ein Gemisch ethylenisch ungesättigter Monomere in einer radikalischen Polymerisation polymerisiert werden und das so erhaltene Reaktionsprodukt in eine wäßrige Dispersion überführt wird. Es ist bevorzugt, wassermischbare organische Lösemittel einzusetzen. Als Beispiele für brauchbare Lösemittel werden Butylglykol, 2-Methoxypropanol, n-Butanol, Methoxybutanol, n-Propanol, Ethylenglykolmonomethylether, Ethylenglykolmonoethylether, Ethylenglykolmonobutylether, Diethylenglykolmonomethylether, Diethylenglykolmonoethylether, Diethylenglykoldiethylether, Diethylenglykolmonobutylether und 3-Methyl-3-methoxybutanol oder Mischungen aus diesen Lösemitteln genannt.

Bevorzugt werden Ketone, wie z.B. Aceton, Methylethylketon, Diethylketon und Methylisobutylketon.

Die radikalische Polymerisation wird bei Temperaturen von 80 bis 160 °C, vorzugsweise 100 bis 160 °C in den oben genannten organischen Lösemitteln bzw. Lösemittelgemischen, ggf. unter Überdruck, durchgeführt.

Als Beispiele für brauchbare Polymerisationsinitiatoren werden freie Radikale bildende Initiatoren, wie z.B. Benzoylperoxid, Azobisisobutyronitril, t-Butylperethylhexanoat und t-Butylperbenzoat genannt.

Bei der Polymerisation kommt es auch zu Pfropfungsreaktionen zwischen dem Polyurethanharz (B) und der Komponente (A). Die Komponenten (A) und (B) werden in einem Gewichtsverhältnis von 1 : 10 bis 10 : 1, vorzugsweise 1 : 2 bis 2 : 1, besonders bevorzugt 1 : 1 eingesetzt.

Als ethylenisch ungesättigte Monomere können praktisch alle radikalisch polymerisierbaren Monomere eingesetzt werden, wobei jedoch die üblichen Einschränkungen für Copolymerisationen gelten, die durch das Q- und e-Schema nach Alfrey und Price bzw. durch die Copolymerisationsparameter vorgegeben sind (vgl. z.B. Brandrup und Immergut, Polymer Handbook, 2nd ed. John Wiley + Sons, New York (1975)).

Als ethylenisch ungesättigte Monomeren können eingesetzt werden:
(i) aliphatische oder cycloaliphatische Ester der Acrylsäure oder Methacrylsäure oder ein Gemisch aus solchen Estern und
(ii) mindestens eine Hydroxylgruppe im Molekül tragende ethylenisch ungesättigte Monomere oder ein Gemisch aus solchen Monomeren und
(iii) mindestens eine Carboxylgruppe im Molekül tragende ethylenisch ungesättigte Monomere oder ein Gemisch aus solchen Monomeren und
(iv) weitere von (i), (ii) und (iii) verschiedene ethylenisch ungesättigte Monomere oder ein Gemisch aus solchen Monomeren sowie
(v) polyungesättigte Monomere, insbesondere ethylenisch polyungesättigte Monomere.

Die oben genannten Monomere werden vorzugsweise als Mischungen eingesetzt, wobei die Komponente (i) in einer Menge von 40 bis 100, vorzugsweise 60 bis 90 Gew.-%, die Komponente (ii) in einer Menge von 0 bis 20, vorzugsweise 3 bis 12 Gew.-%, die Komponente (iii) in einer Menge von 0 bis 30, vorzugsweise 5 bis 15 Gew.-%, die Komponente (iv) in einer Menge von 0 bis 30, vorzugsweise 0 bis 10 Gew.-% und die Komponente (v) in einer Menge von 0 bis 5, vorzugsweise 0 Gew.-% eingesetzt wird, wobei die Summe der Gewichtsanteile von (i), (ii), (iii), (iv) und (v) stets 100 Gew.-% ergibt.

Als Komponente (i) können z.B. eingesetzt werden: Cyclohexylacrylat, Cyclohexylmethacrylat, Alkylacrylate und Alkylmethacrylate mit bis zu 20 Kohlenstoffatomen im Alkylrest, wie z.B. Methyl-, Ethyl-, Propyl-, Butyl-, Hexyl-, Ethylhexyl-, Stearyl- und Laurylacrylat und -methacrylat oder Gemische aus diesen Monomeren.

Als Komponente (ii) können z.B. eingesetzt werden: Hydroxyalkylester der Acrylsäure, Methacrylsäure oder einer anderen α,β-ethylenisch ungesättigten Carbonsäure. Diese Ester können sich von einem Alkylenglykol ableiten, das mit der Säure verestert ist, oder sie können durch Umsetzung der Säure mit einem Alkylenoxid erhalten werden. Als Komponente (ii) werden vorzugsweise Hydroxyalkylester der Acrylsäure und Methacrylsäure, in denen die Hydroxyalkylgruppe bis zu 4 Kohlenstoffatome enthält, oder Mischungen aus diesen Hydroxyalkylestern eingesetzt. Als Beispiele für derartige Hydroxyalkylester werden 2-Hydroxyethylacrylat, 2-Hydroxypropylacrylat, 2-Hydroxypropylmethacrylat, 3-Hydroxypropylacrylat, 3-Hydroxypropylmethacrylat, 2-Hydroxyethylmethacrylat, 3-Hydroxybutylacrylat oder 4-Hydroxybutyl(meth)acrylat genannt. Entsprechende Ester von anderen ungesättigten Säuren, wie z.B. Ethacrylsäure, Crotonsäure und ähnliche Säuren mit bis zu etwa 6 Kohlenstoffatomen pro Molekül können auch eingesetzt werden.

Als Komponente (iii) werden vorzugsweise Acrylsäure und/oder Methacrylsäure eingesetzt. Es können aber auch andere ethylenisch ungesättigte Säuren mit bis zu 6 Kohlenstoffatomen im Molekül eingesetzt werden. Als Beispiele für solche Säuren werden Ethacrylsäure, Crotonsäure, Maleinsäure, Fumarsäure und Itaconsäure genannt.

Als Komponente (iv) können z.B. eingesetzt werden: vinylaromatische Kohlenwasserstoffe, wie Styrol, α-Alkylstyrol und Vinyltoluol, Acryl- und Methacrylamid und Acryl- und Methacrylnitril oder Gemische aus diesen Monomeren.

Als Komponenten (v) können Verbindungen eingesetzt werden, die mindestens zwei radikalisch polymerisierbare Doppelbindungen im Molekül enthalten. Als Beispiele werden genannt: Divinylbenzol, p-Methyldivinylbenzol, o-Nonyldivinylbenzol, Ethandioldi(meth)acrylat, 1,4-Butandioldi(meth)acrylat, 1,6 Hexandioldi(meth)acrylat, Trimethylolpropantri(meth)acrylat, Pentaerythritdi(meth)acrylat, Allylmethacrylat, Diallylphthalat, Butandioldivinylether, Divinylethylenharnstoff, Divinylpropylenharnstoff, Maleinsäurediallylester usw.

Bevorzugt wird der Einsatz von difunktionellen ungesättigten Monomeren wie Butandioldiacrylat oder Hexandioldiacrylat. Bei Verwendung von Glycidylmethacrylat und Methacrylsäure entsteht das entsprechende Glycerindimethacrylat automatisch bei der Polymerisation. Die Art und Menge an polyungesättigten Monomeren ist mit den Reaktionsbedingungen (Katalysatoren, Reaktionstemperatur, Löesemittel) sorgfältig abzustimmen, um keine Gelierung zu erhalten. Die zugesetzte Menge an polyungesättigten Monomeren dient dazu, ohne Gelbildungen die mittlere Molmasse anzuheben. Bevorzugt ist es jedoch, kein polyungesättigtes Monomeres zuzusetzen.

Die erfindungsgemäß eingesetzten, aus (A) und (B) hergestellten Polymere (P) müssen zur Anionenbildung befähigte Gruppen enthalten, die vor oder während der Überführung der Polymere aus dem organischen Lösemittel bzw. Lösemittelgemisch in Wasser neutralisiert werden und die Bildung stabiler wäßriger Dispersionen ermöglichen. Die in Rede stehenden Polymere können neben den zur Anionenbildung befähigten Gruppen auch noch nichtionische stabilisierende Gruppen wie z.B. Poly(oxyalkylen)gruppen, insbesondere Poly(oxyethylen) - und/oder Poly(oxypropylen)- und/oder Poly(oxyethylen) (oxypropylen)gruppen enthalten.

Die Menge der in den erfindungsgemäß eingesetzten, aus (A) und (B) hergestellten Polymeren (P) enthaltenen, zur Anionenbildung befähigten Gruppen soll so hoch sein, daß die Polymere eine Säurezahl von 5 bis 200, vorzugsweise 10 bis 40, besonders bevorzugt 15 bis 30 aufweisen. Die Einführung der zur Anionenbildung befähigten Gruppen in die in Rede stehenden Polymere kann beispielsweise über die Komponenten (d) und (iii) erfolgen. Die zur Anionenbildung befähigten Gruppen können ausschließlich in der Komponente (A) oder ausschließlich in der Komponente (B) oder sowohl in der Komponente (A) als auch in der Komponente (B) enthalten sein. Es ist bevorzugt, daß 50 bis 100, vorzugsweise 70 bis 100, besonders bevorzugt 100 % der zur Anionenbildung befähigten Gruppen in der Komponente (A) enthalten sind.

Die Einführung von Poly(oxyalkylen)gruppen in die erfindungsgemäßen Polymere kann über die Komponente (e) oder über ethylenisch ungesättigte Monomere, die mindestens eine Poly(oxyalkylen)gruppe enthalten (z.B. Poly(oxyethylen)(meth)acrylate) erfolgen. Die erfindungsgemäßen Polymere sollten keine übermäßigen Mengen an Poly(oxyalkylen)gruppen enthalten, weil sonst die Feuchtigkeitsbeständigkeit der Lackfilme herabgesetzt werden kann. Der Gehalt an Poly(oxyalkylen)gruppen kann bei 1 bis 10 Gew.-%, vorzugsweise 1 bis 5 Gew.-% (bezogen auf das Gewicht des aus (A) und (B) hergestellten Polymers) liegen.

Die erfindungsgemäß eingesetzten, aus (A) und (B) hergestellten Polymere (P) sollten vorzugsweise keine nichtionischen stabilisierenden Gruppen enthalten.

Die aus (A) und (B) hergestellten Polymere (P) sollen vorzugsweise eine Hydroxylzahl von 0 bis 100, besonders bevorzugt 20 bis 80 aufweisen. Das zahlenmittlere Molekulargewicht der Polymere soll vorzugsweise 2.000 bis 20.000, besonders bevorzugt 5.000 bis 12.000 betragen.

Besonders bevorzugte Polymere (P) sind die aus (A) und (B) hergestellten Polymere, die einen Polymolekularitätsindex Q von 5 bis 90, vorzugsweise 5 bis 30 aufweisen. Der Polymolekularitätsindex ist der Quotient M_{W} : Mₙ, wobei M_{W} für das gewichtsmittlere und Mₙ für das zahlenmittlere Molekulargewicht steht.

Der Polymolekularitätsindex kann beispielsweise durch gezielten Einsatz von Reglern und die Art der eingesetzten Lösemittel beeinflußt werden. Außerdem wird Q durch den in der Komponente (B) enthaltenen Gehalt an polymerisierbaren Doppelbindungen beeinflußt. Q wird größer, je kleiner die Menge an eingesetztem Regler und die Menge an eingesetzten Lösemitteln, die als Regler fungieren können, ist. Je geringer der Gehalt an polymerisierbaren Doppelbindungen in der Komponente (B) ist, desto größer wird Q. Q kann bestimmt werden durch Gelpermeationschromatographie unter Verwendung eines Polystyrolstandards.

Nach Beendigung der Polymerisation der Komponente (A) wird das erhaltene Polymer zumindest teilweise neutralisiert und in Wasser dispergiert.

Zur Neutralisation können sowohl organische Basen als auch anorganische Basen, wie Ammoniak und Hydrazin, verwendet werden. Vorzugsweise werden primäre, sekundäre und tertiäre Amine, wie z.B. Ethylamin, Propylamin, Dimethylamin, Dibutylamin, Cyclohexylamin, Benzylamin, Morpholin, Piperidin und Triethanolamin verwendet. Besonders bevorzugt werden tertiäre Amine als Neutralisationsmittel eingesetzt, insbesondere Dimethylethanolamin, Triethylamin, Tripropylamin und Tributylamin.

Aus den erhaltenen wäßrigen Bindemitteldispersionen kann gegebenenfalls ein Teil oder vorzugsweise das gesamte organische Lösemittel abdestilliert werden. Die Bindemitteldispersionen enthalten Polymerteilchen, deren mittlere Teilchengröße zwischen 10 und 500 nm, vorzugsweise zwischen 60 bis 150 nm liegt (Meßmethode: Laserlichtstreuung, Meßgerät: Malvern Autosizer 2 C).

Es ist erfindungswesentlich, daß die Pigmentpasten einen sehr hohen Pigmentgehalt aufweisen. Die jeweilige Pigmentierungshöhe hängt dabei aber vom jeweiligen Pigmenttyp ab. So sind beispielsweise Ruß enthaltende Pigmentpasten bereits bei einem Rmßgehalt von mehr als 8 Gew.-% hoch pigmentiert, da für Ruß die übliche Pigmentierungshöhe bei ca. 5 - 6 Gew.-% liegt, jeweils bezogen auf das Gesamtgewicht der Pigmentpaste. Organische Pigmente werden dagegen beispielsweise in deckenden Lacken üblicherweise in einer Menge von im allgemeinen ca. 20 Gew.-% sowie anorganische Pigmente (ausgenommen Titandioxid) üblicherweise in einer Menge von ca. 30 Gew.-% (Titandioxid i.a. bis zu 50 Gew.-%), jeweils bezogen auf das Gesamtgewicht der Pigmentpaste, eingesetzt. Demgegenüber enthalten die erfindungsgemäßen Pigmentpasten die Pigmente in deutlich höheren Mengen. Bevorzugt kann mit einer Pigmentierungshöhe in der Nähe der kritischen Pigment-Volumen-Konzentration (KPVK) gearbeitet werden. Bevorzugt liegt die Pigmentierungshöhe daher im allgemeinen etwa 3 bis 10 %, besonders bevorzugt 5 bis 7 %, unter der KPVK. Die KPVK ist dabei die eingearbeitete Pigmentmenge, bei der das Pigment nicht mehr von der Anreibung benetzt wird. Die KPVK wird experimentell bestimmt.

Gegenstand der vorliegenden Erfindung sind daher Pigmentpasten, die
- (Pa): 10 bis 35 Gew.-%, bevorzugt 15 bis 25 Gew.-%, mindestens eines Polyurethanacrylatharzes (P), bezogen auf den Festkörpergehalt,
- (Pb): 10 bis 65 Gew.-%, bevorzugt 20 bis 50 Gew.-%, Wasser und
- (Pc1): 18 bis 40 Gew.-%, bevorzugt 24 bis 35 Gew. -%, mindestens eines organischen, transparenten Pigmentes oder 30 bis 50 Gew.-%, bevorzugt 33 bis 45 Gew.-%, mindestens eines organischen, deckenden Pigmentes oder
- (Pc2): 30 bis 80 Gew.-%, bevorzugt 38 bis 50 Gew.-%, mindestens eines anorganischen Pigmentes, ausgenommen Weißpigmente, oder mehr als 50 bis 70 Gew.-% Weißpigment oder
- (Pc3): mehr als 8 bis 15 Gew.-%, bevorzugt 9 bis 12 Gew.-%, Ruß
enthalten, wobei die Gewichtsanteile der jeweiligen Komponenten (Pa) bis (Pc) jeweils auf das Gesamtgewicht der Pigmentpaste (also einschließlich gegenfalls weiterer, eingesetzter Komponenten) bezogen sind.

Die Pigmentpasten können zusätzlich - je nach Farbton - noch ein oder mehrere weitere Bestandteile enthalten, wie beispielsweise jeweils
- (Pd): 0 bis 10 Gew.-%, bevorzugt 3 bis 8 Gew.-%, mindestens eines Dispergierhilfsmittels und/oder
- (Pe): 0 bis 10 Gew.-%, bevorzugt 1 bis 5 Gew.-%, eines oder mehrere organische Lösemittel und/oder
- (Pf): 0 bis 10 Gew.-%, bevorzugt 2 bis 4 Gew.-%, eines oder mehrerer, von dem Polyurethan (P) verschiedene Bindemittel (bezogen auf Festkörper) und/oder
- (Pg): 0 bis 20 Gew. -%, bevorzugt 2 bis 10 Gew.-%, eines oder mehrerer Füllstoffe und/oder Extender und/oder
- (Ph): 0 bis 15 Gew. -%, bevorzugt 1 bis 15 Gew. -%, eines oder mehrerer üblicher Hilfs- und/oder Zusatzstoffe,
wobei die Gewichtsanteile der Komponenten (Pd) bis (Ph) wiederum jeweils auf das Gesamtgewicht der jeweiligen Pigmentpaste bezogen sind.

Die erfindungsgemäßen Pigmentpasten weisen bevorzugt einen Feststoffgehalt von 25 bis 85 Gew.-%, bevorzugt von 40 bis 70 Gew.-%, auf, wobei der jeweilige Feststoffgehalt vom Pigmenttyp abhängt. Ferner weisen die erfindungsgemäßen Pigmentpasten bevorzugt einen pH-Wert von 7 bis 9, besonders bevorzugt 7,5 bis 8,5 und bei einer Temperatur von 23 °C und einer Schergeschwindigkeit von 1.000 s⁻¹ eine Viskosität von 50 bis 800 mPa.s, besonders bevorzugt von 100 bis 300 mPa.s, auf.

Besonders bevorzugte Pigmentpasten werden erhalten, wenn die Pigmente und das bzw. die Bindemittel in solchen Mengen eingesetzt werden, daß das Pigment/Bindemittel-Verhältnis zwischen 5:1 und 0,5:1 , ganz besonders bevorzugt zwischen 3:1 und 2:1 , liegt.

Für den Einsatz in den erfindungsgemäßen Pigmentpasten sind prinzipiell alle organischen und anorganischen Pigmente geeignet. Beispielsweise können verschiedene anorganische Pigmente, beispielsweise Schwarzpigmente, wie z.B. Ruß, Buntpigmente, beispielsweise Eisenoxidpigmente, wie z.B. Eisenoxidrot (Hämatit, α-Dieisentrioxid), Eisenoxidgelb (Eisenoxidhydroxid) und Eisenoxidbraun (Mischpigment aus Eisenoxidrot, Eisenoxidgelb und Eisenoxidschwarz), und Chromoxidpigmente und oxidische Mischphasenpigmente sowie organische Pigmente, wie z.B. Perylene, Phthalocyanine, Diketopyrollopyrolle, Isoindolinone, Quinachridone, Dioxazine, Anthrachinone, Azopigmente, Diarylpigmente, Indanthrone, Benzimidazole, Metallkomplexpigmente, Indigo, Thioindigo u.ä. eingesetzt werden.

Die für Uni-Wasserbasislacke konzipierten Buntpigmentpasten sind auch in Metallic-Lacken und Wasser-Reparaturlacken einsetzbar. Ferner eignet sich das Polyurethanacrylat (P) auch zur Anteigung von Effektpigmenten (ohne Dispergierung).

Ferner enthalten die erfindungsgemäßen Pigmentpasten, insbesondere bei kritischen Pigmenten, bevorzugt noch bis zu 10 Gew.-%, besonders bevorzugt 3 bis 8 Gew.-%, mindestens eines Dispergiermittel. Geeignet sind beispielsweise Polyalkylenoxide, insbesondere Polyoxyethylen, Blockcopolymere mit pigmentaffinen Ankergruppen, z.B. Aminogruppen, Tenside, Hydroxyaromaten, substituierte Aromaten, Acetylendiol, Gemische aus Acrylaten mit Tensiden oder Fettsäuren, Alkylphenolethoxylate, Polyurethanoligomere u.ä.

Außer den Komponenten (Pa) bis (Pd) können die erfindungsgemäßen Pigmentpasten ggf. noch 0 bis 10 Gew.-%, bevorzugt 1 bis 5 Gew.-%, jeweils bezogen auf das Gesamtgewicht der Pigmentpaste, eines oder mehrerer organischer Lösemittel (Pe) enthalten. Besonders bevorzugt werden die Pigmentpasten aber im wesentlichen lösemittelfrei formuliert.

Als Beispiele für geeignete Lösemittel (Pe) seien aliphatische oder aromatische Kohlenwasserstoffe, einoder mehrwertige Alkohole, Ether, Ester, Glykolether sowie deren Ester, Ketone wie z.B. Toluol, Xylol, Butanol, Ethyl- oder Butylglykol (= Ethylenglykolmonoethyl- oder -butylether) sowie deren Acetate, Butyldiglykol (Ethylenglykoldibutylether), Ethylenglykoldimethylether, Diethylenglykoldimethylether, Propylenglykolether, Cyclohexanon, Methylethylketon, Aceton, Isophoron oder Mischungen davon genannt.

Ferner können die erfindungsgemäßen Pigmentpasten ggf. noch ein oder mehrere, von der Komponente (Pa) verschiedene Bindemittel (Pf), bevorzugt in einer Menge von 1 bis 10 Gew.-%, besonders bevorzugt 2 bis 4 Gew.-%, jeweils bezogen auf das Gesamtgewicht der Pigmentpaste und auf den Festkörper dieser Bindemittel, enthalten.

Als Beispiel für geeignete Bindemittel (Pf) seien üblicherweise eingesetzte wäßrige Anreibeharze, wie z.B. Polyurethane, Polyester, Polyacrylate, Aminoplastharze, Polyether und Carbamate genannt.

Weiterhin können die Pigmentpasten ggf. noch übliche Füllstoffe und/oder Extender (Pg), bevorzugt in einer Menge von 0 bis 20 Gew.-%, besonders bevorzugt 2 bis 10 Gew.-%, jeweils bezogen auf das Gesamtgewicht der Pigmentpaste, enthalten.

Beispiele für geeignete Füllstoffe und/oder Extender (Pg) sind silikatische Füllstoffe, wie beispielsweise Kaolin (China Clay), Talkum, Kieselkreide, verschiedene Glimmersorten, wie beispielsweise Eisenglimmer, sowie Siliciumcarbid und Quarzmehl; carbonatische Füllstoffe, wie beispielsweise Kreide und Dolomit; sulfatische Füllstoffe, wie beispielsweise Barium- und Calciumsulfat.

Schließlich können die Pigmentpasten ggf. noch weitere übliche Hilfs- und Zusatzstoffe (Ph) in üblichen Mengen, bevorzugt in einer Menge von 0 bis 15 Gew.-%, besonders bevorzugt 1 bis 5 Gew,-%, jeweils bezogen auf das Gesamtgewicht der Pigmentpaste, enthalten.

Als Beispiele seien Stabilisatoren, Emulgatoren, Rheologiehilfsmittel, z.B. anorganische Schichtsilikate, Kieselgele, organische Celluloseether, Poly(meth)acrylsäuren, Poly(meth)acrylamid, Polyvinylalkohol, Assoziativverdicker, wie z.B. hydrophob modifizierte, ethoxilierte Urethane u.ä., Weichmacher, wie z.B. Polypropylenoxide, Netzmittel, wie z.B. Alkylenphenolethoxilate oder Acetylendiole, Verlaufsmittel, wie z.B. Acrylate und Silikonöle, Entschäumer, wie z.B. Silikonölentschäumer und Mineralölentschäumer mit festen Bestandteilen, Biozide, Fungizide u.a. genannt. Diese Stoffe können den Einzelkomponenten und/oder der Gesamtmischung zugesetzt werden.

Die Herstellung der Pigmentpasten erfolgt nach den üblichen, dem Fachmann bekannten Methoden. Üblicherweise wird dabei das oder die Pigmente und ggf. der oder ggf. die Füllstoffe bzw. Extender in einer Teilmenge des Bindemittels vordispergiert und anschließend zu ausreichender Kornfeinheit und Farbstärke gemahlen. Als Auflackmischung dienen die übrige Bindemittelmenge, ggf. auch weitere zusätzliche Bindemittel und Vernetzer, sowie ggf. Lösemittel, Dispergierhilfsmittel und weitere Additive.

Die vorliegende Erfindung betrifft ebenfalls diese Pigmentpasten enthaltende, wäßrige Lacke, wobei diese Lacke die erfindungsgemäße Pigmentpaste in einem Anteil von 10 bis 60 Gew.-%, bevorzugt von 15 bis 30 Gew.-%, jeweils bezogen auf das Gesamtgewicht des wäßrigen Lackes, enthalten.

Die Pigmentpasten werden gemäß der vorliegenden Erfindung bevorzugt zur Herstellung von Uni-Basislacken, aber auch Metallic-Lacken und Wasser-Reparatur-Lacken, die zur Beschichtung von Metall- und/oder Kunststoffsubstraten geeignet sind, eingesetzt. Die vorliegende Erfindung betrifft daher ebenfalls Verfahren zur Beschichtung von Metall- und/oder Kunststoffsubstraten, die-dadurch gekennzeichnet sind, daß wäßrige Lacke eingesetzt werden, die 10 bis 60 Gew.-%, bevorzugt von 15 bis 30 Gew.-%, der zuvor beschriebenen Pigmentpaste und 40 bis 80 Gew.-%, bevorzugt von 50 bis 70 Gew.-% einer üblichen Lackzusammensetzung, bevorzugt einer Uni-Basislackzusammensetzung, jeweils bezogen auf das Gesamtgewicht des wäßrigen Lackes, enthalten.

Ferner ist es auch möglich, unterschiedliche Farbtöne der Basislacke unter Verwendung verschiedener erfindungsgemäßer Pigmentpasten herzustellen. Es ist daher auch die Verwendung der erfindungsgemäßen Pigmentpasten zum Aufbau eines Mischsystems möglich, mit dessen Hilfe Lacke mit festgelegter Tönung herstellbar sind. Derartige Mischsysteme können beispielsweise direkt beim jeweiligen Lackhersteller, aber auch beim jeweiligen Kunden, beispielsweise beim Automobilhersteller zur Herstellung von Automobilserienlacken zum Einsatz kommen. Wenn durch entsprechende Wahl der Vernetzer oder Auflackbindemittel (im Bereich der Reparaturlackierung z.B. physikalisch trocknende Bindemittel) auch niedrige Einbrenntemperaturen der Lacke gewährleistet sind, können die erfindungsgemäßen Pigmentpasten auch zur Herstellung von Mischsystemen im Bereich der Autoreparaturlackierung oder der Kunststofflackierung eingesetzt werden.

Gegenstand der Erfindung ist daher auch ein Mischsystem für die Herstellung wäßriger Überzugsmittel, das dadurch gekennzeichnet ist, daß das Mischsystem verschiedene der erfindungsgemäßen Pigmentpasten enthält.

Zur Herstellung der wäßrigen Lacke mit dem jeweils gewünschten Farbton werden dann ein oder mehrere der erfindungsgemäßen Pigmentpasten mit einer oder mehreren, pigmentfreien Komponenten, die die übrigen Bestandteile der wäßrigen Lacke enthalten, gemischt.

Die in Rede stehenden, unter Verwendung der erfindungsgemäßen Pigmentpasten hergestellten wäßrigen Lacke, bevorzugt Uni-Basislacke, enthalten dabei üblicherweise neben der Pigmentpaste noch ein oder mehrere Bindemittel, bevorzugt mindestens ein Polyurethanacrylat (P), einen Vernetzer, wie z.B. Aminoplastharze, blockierte Polyisocyanate, Vernetzer auf Triazin-Basis, gegebenenfalls Rheologiehilfsmittel und/oder andere übliche Hilfs- und Zusatzstoffe sowie ggf. organische Lösemittel.

Übliche Lacke bzw. Uni-Basislacke, die zusammen mit der oder den erfindungsgemäßen Pigmentpasten zu dem erfindungsgemäßen Lack kombiniert werden, sind solche aus handelsüblichen Rohstoffen, wie z.B. Polyestern, Polyacrylaten, Cellulosederivaten, bevorzugt zumindest anteilig dem obenbeschriebenen Polyurethanacrylat (P), Rheologiehilfsmitteln, wie z.B. Wachsen, sowie weiteren Hilfs- und Zusatzstoffen.

In der Regel liegt der Anteil an Urethanacrylat (P) in derartigen Lacken - je nach Farbton - bei 10 bis 19 Gew.-%, bevorzugt bei 12 bis 17 Gew.-%. Der Vernetzeranteil, z.B. in Form eines Triazinharzes, liegt in der Regel bei 3 bis 9 Gew.-%, bevorzugt bei 4 bis 8 Gew.-%. Der Gesamtpigmentgehalt liegt - je nach Farbton und Pigmenttyp - im allgemeinen zwischen 5 und 30 Gew.-%. Der Wassergehalt entsprechender Lacksysteme liegt üblicherweise zwischen 30 und 50 Gew.-%, der Anteil organischer Lösemittel schwankt im allgemeinen je nach Farbton und Rezeptur zwischen 5 und 20 Gew.-%. Es können jedoch auch cosolventfreie Lacke hergestellt werden.

Weiterhin können den Basislacken vernetzte polymere Mikroteilchen, wie sie in der EP-A-38 127 offenbart sind und/oder übliche rheologische anorganische oder organische Additive in üblichen Mengen, wie beispielsweise 0,05 bis 6 Gew.-%, bezogen auf das Gesamtgewicht der Basislacke zugesetzt werden. So wirken als Verdikker beispielsweise anorganische Schichtsilikate, wie z.B.Aluminium-Magnesium-Silikate, Natrium-Magnesium-Schichtsilikate und Natrium-Magnesium-Fluor-Lithium-Schichtsilikate des Montmorillonit-Typs, wasserlösliche Celluloseether, wie Hydroxiethylcellulose, Methylcellulose oder Carboxymethylcellulose sowie synthetische Polymere mit ionischen und/oder assoziativ wirkenden Gruppen, wie Polyvinylalkohol, Poly(meth)acrylamid, Poly(meth)acrylsäure, Polyvinylpyrrolidon, Styrol-Malein-säureanhydrid- oder Ethylen-Maleinsäureanhydrid-Copolymere und ihre Derivate oder auch hydrophob modifizierte ethoxilierte Urethane oder Polyacrylate. Geeignet ist auch eine Kombination aus carboxylgruppenhaltigem Polyacrylat-Copolymer mit einer Säurezahl von 60 bis 780, bevorzugt 200 bis 500 mg KOH/g und einem Natrium-Magnesium-Schichtsilikat. Das Natrium-Magnesium-Schichtsilikat kann auch in Form einer wäßrigen Paste eingesetzt werden. Bevorzugte Pasten enthalten entweder 3 Gew.-% Schichtsilikat sowie 3 Gew.-% Polypropylenglykol und 2 Gew.-% Schichtsilikat und 2 Gew.-%, jeweils bezogen auf das Gesamtgewicht der Paste, anderer handelsüblicher oberflächenaktiver Substanzen.

Die Basislacke weisen im allgemeinen einen Festkörpergehalt von etwa 6 bis 60 Gew.-%, bevorzugt 15 bis 45 Gew.-%, auf.

Die Basislacke können zusätzlich übliche organische Lösemittel enthalten. Deren Anteil wird möglichst gering gehalten. Er liegt beispielsweise unter 15 Gew.-%.

Die Basislacke werden im allgemeinen auf einen pH-Wert zwischen 6,5 und 9,0 eingestellt. Der pH-Wert kann mit üblichen Aminen, wie z.B. Ammoniak, Triethylamin, Dimethylaminoethanol und N-Methylmorpholin eingestellt werden.

Schließlich eignen sich die erfindungsgemäßen Pigmentpasten auch zur Herstellung mittels Strahlung härtbarer Lacke, insbesondere mittels UV- oder Elektronen-Strahlung härtbarer Lacke. Hierzu werden die erfindungsgemäßen Pigmentpasten mit strahlenhärtbaren Bindemittel-Lösungen bzw. strahlenhärtbaren Bindemittel-Dispersionen sowie ggf. weiteren, für strahlenhärtbare Lacke typischen Hilfs- und Zusatzstoffen kombiniert. Überraschenderweise treten hierbei keine Unverträglichkeiten auf, obwohl die erfindungsgemäßen Pigmentpasten selbst nicht srahlenhärtbar sind bzw. eine nichtstrahlenhärtbare Polyurethan-Dispersion enthalten.

Die mit Hilfe der erfindungsgemäßen Pigmentpasten hergestellten erfindungsgemäßen Lacke (z.B. Basislacke, UV-Lacke u.ä., s.o.) können auf die unterschiedlichsten Substrate, wie beispielsweise Metall, Kunststoff, Holz oder Papier, appliziert werden. Die Applikation erfolgt mit Hilfe üblicher Methoden, beispielsweise Spritzen, Rakeln, Tauchen oder Streichen.

Die erfindungsgemäßen Beschichtungsmittel werden vorzugsweise zur Herstellung von Decklackierungen im Rahmen einer Einschicht- oder Mehrschichtlackierung eingesetzt. Die erfindungsgemäßen Beschichtungsmittel können beispielsweise sowohl bei der Serien- als auch bei der Reparaturlackierung von Automobilkarosserien eingesetzt werden. Sie werden bevorzugt im Bereich der Serienlackierung eingesetzt.

Die erfindungsgemäßen Lacke werden üblicherweise nach Zwischentrocknung und Überlackierung mit Klarlacken bei Temperaturen von 80 bis 160 °C, bevorzugt bei Temperaturen von 100 bis 140 °C, gehärtet. In speziellen Anwendungsformen der erfindungsgemäßen Lacke können bei entsprechender Wahl der Vernetzer auch niedrigere Härtungstemperaturen angewendet werden oder physikalisch trocknende Systeme eingesetzt werden.

Im folgenden wird nun die Erfindung anhand von Ausführungsbeispielen näher erläutert. Alle Angaben über Teile und Prozente sind dabei Gewichtsangaben, falls nicht ausdrücklich etwas anderes festgestellt wird.

### 1. Herstellung einer Polyurethanacrylat-Dispersion (Komponente a)

In einem Reaktionsgefäß mit Rührer, Rückflußkühler und zwei Zulaufgefäßen werden zu einer Mischung aus 77,6 Teilen eines Polyesterdiols mit einem zahlenmittleren Molekulargewicht von 630 auf Basis Adipinsäure, Hexandiol und Neopentylglykol, 9,3 Teilen Neopentylglykol, 3,0 Teilen Trimethylolpropanmonoallylether, 0,1 Teilen Dibutylzinndilaurat und 110,2 Teilen Methylisobutylketon 63,5 Teile Isophorondiisocynat gegeben. Das Reaktionsgemisch wird anschließend auf 105 °C erhitzt. Bei einem NCO-Gehalt von 1,8 % werden 15,1 Teile Trimethylolpropan zu dem Reaktionsgemisch zugegeben und die Reaktion weitergeführt, bis keine Isocyanatgruppen mehr nachgewiesen werden können.

Bei einer Temperatur von 105 °C wird anschließend ein Gemisch aus 69,6 Teilen n-Butylacrylat, 69,6 Teilen Methylmethacrylat, 16,6 Teilen Hydroxypropylmethacrylat und 13,0 Teilen Acrylsäure innerhalb von 3 Stunden zu dem Reaktionsgemisch gegeben. Gleichzeitig werden 5,1 Teile t-Butylperethylhexanoat, gelöst in 42,8 Teilen Methylisobutylketon, innerhalb von 3,5 Stunden zudosiert. Nach weiteren 2,5 Stunden bei 105 °C wird das Reaktionsgemisch auf 90 °C abgekühlt. Anschließend werden 10,6 Teile Dimethylethanolamin und 483,2 Teile entionisiertes Wasser zugegeben. Nach Entfernung des Methylisobutylketons im Vakuum erhält man eine stabile 43-%ige Dispersion mit einem pH-Wert von 7,9.

### 2. Herstellung von Pigmentpasten

### 2.1. Herstellung einer anorganische Pigmente enthaltenden Pigmentpaste 1

350,0 g der obenbeschriebenen Polyurethanacrylat-Dispersion werden vorgelegt. Unter Rühren (4 m/s) werden 40,0 g deionisiertes Wasser und 350,0 g eines Chromtitanpigmentes zugegeben. Der Ansatz wird nun 5 min mit einer Rührergeschwindigkeit von 20 m/s mit Hilfe eines Labordissolvers dissolert. Die Temperatur bleibt dabei unter 40 °C. Nach dem Vordissolvern wird der Ansatz auf einer kontinuierlichen Laborrührwerksmühle (Mahlkörper = SAZ-Perlen; Mahlkörpergröße = 1,0 bis 1,6 mm; Füll-grad der Mahlkammer = 75 % und Rotorgeschwindigkeit = 7,5 m/s) in Kreisfahrweise gemahlen. Es wird eine spezifische Energie von 100 Wh/kg eingetragen. Die Temperatur bleibt unter 40 °C. Danach entspricht die Paste den Anforderungen einer wäßrigen Pigmentpaste, die in einem Autoserienlack eingesetzt wird (vgl. auch Tabelle 1).

### 2.2. Herstellung einer organische Pigmente enthaltenden Pigmentpaste 2

290,0 g der obenbeschriebenen Polyurethanacrylat-Dispersion werden vorgelegt. Unter Rühren (4 m/s) werden 140,0 g deionisiertes Wasser, 35,0 g eines handelsüblichen Netz- und Dispergieradditivs und 285,0 g eines Phthalocyaninblaupigmentes zugegeben. Der Ansatz wird nun 5 min mit einer Rührergeschwindigkeit von 20 m/s mit Hilfe eines Labordissolvers dissolert. Die Temperatur bleibt dabei unter 40 °C. Nach dem Vordissolvern wird der Ansatz auf einer kontinuierlichen Laborrührwerksmühle (Mahlkörper = SAZ-Perlen; Mahlkörpergröße = 1,0 bis 1,6 mm; Füllgrad der Mahlkammer = 75 % und Rotorgeschwindigkeit = 7,5 m/s) in Kreisfahrweise gemahlen. Es wird eine spezifische Energie von 460 Wh/kg eingetragen. Die Temperatur bleibt unter 40 °C. Danach entspricht die Paste den Anforderungen einer wäßrigen Pigmentpaste, die in einem Autoserienlack eingesetzt wird (vgl. auch Tabelle 1).

### 2.3. Herstellung einer Weißpigmente enthaltenden Pigmentpaste 3

350,0 g der obenbeschriebenen Polyurethanacrylat-Dispersion werden vorgelegt. Unter Rühren (4 m/s) werden 16,0 g deionisiertes Wasser, 16,0 g Isopropoxypropanol und 415,0 g eines Titandioxidpigmentes zugegeben. Der Ansatz wird nun 5 min mit einer Rührergeschwindigkeit von 20 m/s mit Hilfe eines Labordissolvers dissolert.

Die Temperatur bleibt dabei unter 40 °C. Nach dem Vordissolvern wird der Ansatz auf einer kontinuierlichen Laborrührwerksmühle (Mahlkörper = SAZ-Perlen; Mahlkörpergröße = 1,0 bis 1,6 mm; Füllgrad der Mahlkammer = 75 % und Rotorgeschwindigkeit = 7,5 m/s) in Kreisfahrweise gemahlen. Es wird eine spezifische Energie von 75 Wh/kg eingetragen. Die Temperatur bleibt unter 40 °C. Danach entspricht die Paste den Anforderungen einer wäßrigen Pigmentpaste, die in einem Autoserienlack eingesetzt wird (vgl. auch Tabelle 1).

**Tabelle 1:**

| Lagerstabilität der Pigmentpasten 1 und 2 | | | |
|---|---|---|---|
| Paste | Parameter | Anfalls-Wert | Lagerungswert |
| 1 | Farbstärke | 100,0 % | 97,7 % |
| 1 | Farbort | 0,0 DE | 0,2 DE |
| 1 | Viskosität | 315 mPa.s | 422 mPa.s |
| 2 | Farbstärke | 100,0 % | 103,9 % |
| 2 | Farbort | 0,0 DE | 0,25 DE |
| 2 | Viskosität | 300 mPa.s | 331 mPa.s |
| 3 | Aufhellvermögen | 100,0 % | 98 % |
| 3 | Farbort | 0,0 DE | 0,12 DE |
| 3 | Viskosität | 350 mPa.s | 440 mPa.s |

### Erläuterungen zu Tabelle 1:

Farbstärke: farbmetrisch gemessen mit Hilfe einer Weißabmischung, wobei die Mengen an der obenbeschriebenen Weißpaste 3 und der Pigmentpaste derart gewählt werden, daß 1 Teil Buntpigment (fest) auf 10 Teile Titandioxid (fest) kommen.

Farbort: farbmetrisch gemessen; angegeben ist für die Pigmentpaste 1 der Farbort für den Purton und für die Pigmentpaste 2 der Farbort der Weißausmischung (1 Teil Buntpigment, fest, auf 10 Teile Titandioxid, fest)

Viskosität: angegeben ist die Viskosität bei einer Temperatur von 23 °C und gemessen bei einem Schergefälle von 1000 s⁻¹

### 3. Herstellung eines Auflackgemisches zur Herstellung von Wasserbasislacken

Zunächst wird die Apparatur durch Vorspülen mit Lösemittel und deionisiertem Wasser gereinigt. Alle zur Herstellung des Auflackgemisches eingesetzten Komponenten werden zur besseren Homogenisierung unter einem Dissolver zugegeben.

Zunächst werden 21,4 Teile einer Thixotropierungsmittellösung auf Basis eines synthetischen Schichtsilikates (3 %ig in deionisiertem Wasser) vorgelegt und ca. 10 min mit Hilfe eines Dissolvers vordissolvert (Rührergeschwindigkeit Maximum). Dann werden 39,0 Teile der obenbeschriebenen Polyurethanacrylat-Dispersion und danach 0,6 Teile eines handelsüblichen Entschäumers auf Basis einer Kombination von flüssigen Kohlenwasserstoffen, hydrophober Kieselsäure, synthetischen Copolymeren und nicht ionogen Emulgatoren zugegeben. Danach werden 3,0 Teile Butyldiglykol, 1,5 Teile Butylglykol, 5,0 Teile Shellsol® T, 5,0 Teile N-Methylpyrrolidon und 2,5 Teile Ethylhexanol zugegeben. Anschließend werden 5,0 Teile einer handelsüblichen Netzmittel-Lösung auf Basis Acetylendiol (12,5 %ig in Butyldiglykol) und 2,5 Teile Polypropylenglykol zugefügt. Um den pH-Wert auf 7,8 bis 8,5 einzustellen, werden noch 3,0 Teile einer 10 %igen Aminlösung hinzugegeben und schließlich mit 11,5 Teilen deionisiertem Wasser auf den gewünschten Festkörpergehalt eingestellt.

### 4. Herstellung von Uni-Basislacken

### 4.1. Herstellung eines weißen Uni-Wasserbasislackes

Man legt 50,0 Teile der obenbeschriebenen Weißpaste 3 vor und gibt die übrigen, nachfolgend aufgeführten Bestandteile unter einem Dissolver zu. Zu der Weißpaste werden zunächst 44,0 Teile des obenbeschriebenen Auflackgemisches hinzugefügt. Danach werden 3,25 Teile eines handelsüblichen Melaminharzes (90 %ig in Isobutanol, Handelsprodukt Cymel 327 der Firma Cyamid) und 2,1 Teile eines weiteren handeslüblichen Melaminharzes (100 %ig, Handelsprodukt Cymel 303 der Firma Cyamid) hinzugegeben. Danach werden zur besseren Vernetzung noch 0,65 Teile einer handelsüblichen Katalysatorlösung auf Basis para-Toluolsulfonsäure (25 %ig in Isopropanol) zugefügt. Dann wird 30 min dissolvert (Rührergeschwindigkeit Maximum).

### 4.2. Herstellung eines blauen Uni-Wasserbasislackes

Man legt 20,0 Teile der obenbeschriebenen Blaupaste 2 vor und gibt die übrigen, nachfolgend aufgeführten Bestandteile unter einem Dissolver zu. Zu der Blaupaste werden zunächst 71,0 Teile des obenbeschriebenen Auflackgemisches hinzugefügt. Danach werden 9,0 Teile eines handelsüblichen Melaminharzes (90 %ig in Isobutanol, Handelsprodukt Cymel 327 der Firma Cyamid) zugefügt. Dann wird 30 min dissolvert (Rührergeschwindigkeit Maximum).

## Patentansprüche

1. Pigmentpaste, die als Bindemittel mindestens ein Polyurethanacrylat (P) enthält, das erhältlich ist, indem in einem organischen Lösemittel oder in einem Gemisch organischer Lösemittel
(A) ethylenisch ungesättigte Monomere oder ein Gemisch ethylenisch ungesättigter Monomere in Gegenwart
(B) eines Polyurethanharzes (B), das ein zahlenmittleres Molekulargewicht von 200 bis 30.000, vorzugsweise 1.000 bis 5.000 aufweist und das im statistischen Mittel pro Molekül 0,05 bis 1,1, vorzugsweise 0,2 bis 0,9, besonders bevorzugt 0,3 bis 0,7 polymerisierbare Doppelbindungen enthält, polymerisiert werden und das so erhaltene Reaktionsprodukt in eine wäßrige Dispersion überführt wird,
**dadurch gekennzeichnet, daß** die Pigmentpaste
(Pa) 10 bis 35 Gew.-% mindestens eines Polyurethanacrylatharzes (P), bezogen auf den Festkörpergehalt,
(Pb) 10 bis 65 Gew.-% Wasser und
(Pc1) 18 bis 40 Gew.-% mindestens eines organischen, transparenten Pigmentes oder 30 bis 50 Gew.-% mindestens eines organischen, deckenden Pigmentes oder
(Pc2) 30 bis 80 Gew.-% mindestens eines anorganischen Pigmentes, ausgenommen Weißpigmente, oder mehr als 50 bis 70 Gew.-% Weißpigment oder
(Pc3) mehr als 8 bis 15 Gew.-% Ruß
enthält, wobei die Gewichtsanteile der jeweiligen Komponenten (Pa) bis (Pc) jeweils auf das Gesamtgewicht der Pigmentpaste bezogen sind.

2. Pigmentpaste nach Anspruch 1, **dadurch gekennzeichnet, daß** sie
(Pa) 15 bis 25 Gew.-% mindestens eines Polyurethanacrylatharzes (P), bezogen auf den Festkörpergehalt,
(Pb) 20 bis 50 Gew.-% Wasser und
(Pc1) 24 bis 35 Gew.-% mindestens eines organischen, transparenten Pigmentes oder 33 bis 45 Gew.-% mindestens eines organischen, deckenden Pigmentes
(Pc2) 38 bis 50 Gew.-% mindestens eines anorganischen Pigmentes, ausgenommen Weißpigmente, oder
(Pc3) 9 bis 12 Gew.-% Ruß
enthält, wobei die Gewichtsangaben der Komponenten (Pa) bis (Pc) jeweils auf das Gesamtgewicht der Pigmentpaste bezogen sind.

3. Pigmentpaste nach Anspruch 1 oder 2, **dadurch gekennzeichnet, daß** sie zusätzlich noch einen oder mehrere der folgenden Bestandteile
(Pd) bis zu 10 Gew.-%, bevorzugt 3 bis 8 Gew.-%, mindestens eines Dispergierhilfsmittels und/oder
(Pe) 0 bis 10 Gew.-%, bevorzugt 1 bis 5 Gew.-%, eines oder mehrere organische Lösemittel und/oder
(Pf) 0 bis 10 Gew.-%, bevorzugt 2 bis 4 Gew.-%, eines oder mehrerer, von dem Polyurethan (P) verschiedene Bindemittel (bezogen auf Festkörper) und/oder
(Pg) 0 bis 20 Gew.-%, bevorzugt 2 bis 10 Gew.-%, eines oder mehrerer Füllstoffe und/oder Extender und/oder
(Ph) 0 bis 15 Gew.-%, bevorzugt 1 bis 15 Gew.-%, eines oder mehrerer üblicher Hilfs- und/oder Zusatzstoffe,
enthält, wobei die Gewichtsanteile Komponenten (Pd) bis (Ph) wiederum jeweils auf das Gesamtgewicht der jeweiligen Pigmentpaste bezogen sind.

4. Pigmentpaste nach einem der Ansprüche 1 bis 3, **dadurch gekennzeichnet, daß** sie einen Feststoffgehalt von 25 bis 85 Gew.-%, bevorzugt von 40 bis 70 Gew.-%, und/oder einen pH-Wert von 7 bis 9, bevorzugt von 7,5 bis 8,5, und/oder bei einer Temperatur von 23 °C und einer Schergeschwindigkeit von 1000 s ⁻¹ eine Viskosität von 50 bis 800 mPa.s, bevorzugt 100 bis 300 mPa.s, aufweist.

5. Pigmentpaste nach einem der Ansprüche 1 bis 4, **dadurch gekennzeichnet, daß** das Pigment/Bindemittel-Verhältnis in der Pigmentpaste zwischen 5:1 und 0,5:1, bevorzugt zwischen 3:1 und 2:1, liegt.

6. Wäßriger Lack, **dadurch gekennzeichnet, daß** er eine oder mehrere Pigmentpasten nach einem der Ansprüche 1 bis 5 enthält.

7. Wäßriger Lack nach Anspruch 6, **dadurch gekennzeichnet, daß** er 10 bis 60 Gew.-%, bevorzugt 15 bis 30 Gew.-%, mindestens einer Pigmentpaste nach einem der Ansprüche 1 bis 5 enthält.

8. Wäßriger Lack nach Anspruch 6 oder 7, **dadurch gekennzeichnet, daß** er als Bindemittel mindestens ein Polyurethanacrylat (P), ggf. zusammen mit anderen Bindemitteln, enthält.

9. Verfahren zum Beschichten von Substraten, **dadurch gekennzeichnet, daß** ein wäßriger Lack nach einem der Ansprüche 6 bis 8 aufgebracht wird.

10. Verfahren nach Anspruch 9, **dadurch gekennzeichnet, daß** der wäßrige Lack nach einem der Ansprüche zur Herstellung einer Deckbeschichtungsbeschichtung, insbesondere als Uni-Basislack, eingesetzt wird.

11. Verwendung der Pigmentpasten nach einem der Ansprüche 1 bis 5 zur Herstellung von wäßrigen Lakken für die Beschichtung von Automobilkarosserien, insbesondere im Bereich der Serienlackierung.

12. Verwendung der Pigmentpasten nach einem der Ansprüche 1 bis 5 zur Herstellung von strahlenhärtbaren Lacken.

13. Mischsystem für die Herstellung wäßriger Überzugsmittel, **dadurch gekennzeichnet, daß** das Mischsystem mehrere Pigmentpasten nach einem der Ansprüche 1 bis 5 enthält.

## Claims

1. Pigment paste which comprises as binder at least one polyurethane acrylate (P) which is obtainable by polymerizing, in an organic solvent or in a mixture of organic solvents,
(A) ethylenically unsaturated monomers, or a mixture of ethylenically unsaturated monomers, in the presence of
(B) a polyurethane resin (B) which has a number-average molecular weight of from 200 to 30,000, preferably from 1000 to 5000, and which contains on average from 0.05 to 1.1, preferably from 0.2 to 0.9 and, with particular preference, from 0.3 to 0.7 polymerizable double bonds per molecule, and converting the resulting reaction product into an aqueous dispersion,
**characterized in that** the pigment paste comprises
(Pa) from 10 to 35 % by weight of at least one polyurethane acrylate resin (P), based on the solids content,
(Pb) from 10 to 65 % by weight of water and
(Pc1) from 18 to 40 % by weight of at least one organic, transparent pigment or from 30 to 50 % by weight of at least one organic, opaque pigment, or
(Pc2) from 30 to 80 % by weight of at least one inorganic pigment, with the exception of white pigments, or from more than 50 to 70 % by weight of white pigment, or
(Pc3) from more than 8 to 15 % by weight of carbon black,
the proportions by weight of the respective components (Pa) to (Pc) being based in each case on the overall weight of the pigment paste.

2. Pigment paste according to Claim 1, **characterized in that** it comprises
(Pa) from 15 to 25 % by weight of at least one polyurethane acrylate resin (P), based on the solids content,
(Pb) from 20 to 50 % by weight of water and
(Pc1) from 24 to 35 % by weight of at least one organic, transparent pigment or from 33 to 45 % by weight of at least one organic, opaque pigment, or
(Pc2) from 38 to 50 % by weight of at least one inorganic pigment, with the exception of white pigments, or
(Pc3) from 9 to 12 % by weight of carbon black,
the proportions by weight of the components (Pa) to (Pc) being based in each case on the overall weight of the pigment paste.

3. Pigment paste according to Claim 1 or 2, **characterized in that** it additionally comprises one or more of the following constituents
(Pd) from 0 to 10 % by weight, preferably from 3 to 8 % by weight, of at least one dispersing auxiliary and/or
(Pe) from 0 to 10 % by weight, preferably from 1 to 5 % by weight, of one or more organic solvents and/or
(Pf) from 0 to 10 % by weight, preferably from 2 to 4 % by weight, of one or more binders other than polyurethane (P) (based on solids) and/or
(Pg) from 0 to 20 % by weight, preferably from 2 to 10 % by weight, of one or more fillers and/or extenders and/or
(Ph) from 0 to 15 % by weight, preferably from 1 to 15 % by weight, of one or more customary auxiliaries and/or additives, the proportions by weight of components (Pd) to (Ph) again being based in each case on the overall weight of the respective pigment paste.

4. Pigment paste according to one of Claims 1 to 3, **characterized in that** it has a solids content of from 25 to 85 % by weight, preferably from 40 to 70 % by weight, and/or a pH of from 7 to 9, preferably from 7.5 to 8.5, and/or a viscosity, at a temperature of 23°C and a shear rate of 1000 s⁻¹, of from 50 to 800 mPa.s, preferably from 100 to 300 mPa.s.

5. Pigment paste according to one of Claims 1 to 4, **characterized in that** the pigment/binder ratio in the pigment paste is between 5:1 and 0.5:1, preferably between 3:1 and 2:1.

6. Aqueous paint, **characterized in that** it comprises one or more pigment pastes according to one of Claims 1 to 5.

7. Aqueous paint according to Claim 6, **characterized in that** it comprises from 10 to 60 % by weight, preferably from 15 to 30 % by weight, of at least one pigment paste according to one of Claims 1 to 5.

8. Aqueous paint according to Claim 6 or 7, **characterized in that** it comprises as binder at least one polyurethane acrylate (P), alone or together with other binders.

9. Method of coating substrates, **characterized in that** an aqueous paint according to one of Claims 6 to 8 is applied.

10. Method according to Claim 9, **characterized in that** the aqueous paint according to one of the claims is employed to prepare a topcoat finish, in particular as a solid-colour basecoat.

11. Use of the pigment pastes according to one of Claims 1 to 5 for preparing aqueous paints for the coating of car bodies, especially in the field of production-line finishing.

12. Use of the pigment pastes according to one of Claims 1 to 5 for preparing radiation-curable paints.

13. Mixer system for the preparation of aqueous coating compositions, **characterized in that** the mixer system comprises two or more pigment pastes according to one of Claims 1 to 5.

## Revendications

1. Pâte de pigment qui contient en tant que liant au moins un polyuréthanne-acrylate (P) qui est obtenu par polymérisation, dans un solvant organique ou dans un mélange de solvants organiques
(A) de monomères à insaturation éthylénique ou d'un mélange de monomères à insaturation éthylénique, en présence
(B) d'une résine polyuréthanne (B), qui présente une masse moléculaire moyenne en nombre de 200 à 30 000, de préférence de 1 000 à 5 000, et qui contient en moyenne statistique par molécule de 0,05 à 1,1, de préférence de 0,2 à 0,9, de façon particulièrement préférée, de 0,3 à 0,7 double liaison polymérisable, et conversion en une dispersion aqueuse du produit de réaction ainsi obtenu,
**caractérisée en ce que** la pâte de pigment contient
(Pa) de 10 à 35 % en poids d'au moins une résine polyuréthanne-acrylate (P), par rapport à la teneur en matières solides,
(Pb) de 10 a 65 % en poids d'eau et
(Pc1) de 18 à 40 % en poids d'au moins un pigment organique transparent ou de 30 à 50 % en poids d'au moins un pigment organique couvrant, ou
(Pc2) de 30 à 80 % en poids d'au moins un pigment minéral, à l'exception d'un pigment blanc, ou plus de 50 à 70 % en poids de pigment blanc, ou
(Pc3) plus de 8 à 15 % en poids de noir de carbone, les proportions pondérales des composants (Pa) à (Pc) respectifs étant dans chaque cas par rapport au poids total de la pâte de pigment.

2. Pâte de pigment selon la revendication 1, caxactériséè en ce qu'elle contient
(Pa) de 15 à 25 % en poids d'au moins une résine polyuréthanne-acrylate (P), par rapport à la teneur en matières solides,
(Pb) de 20 à 50 % en poids d'eau et
(Pc1) de 24 à 35 % en poids d'au moins un pigment organique transparent ou de 33 à 45 % en poids d'au moins un pigment organique couvrant,
(Pc2) de 38 à 50 % en poids d'au moins un pigment minéral, à l'exception de pigments blancs, ou
(Pc3) de 9 à 12 % en poids de noir de carbone,
les proportions pondérales des composants (Pa) à (Pc) étant dans chaque cas par rapport au poids total de la pâte de pigment.

3. Pâte de pigment selon la revendication 1 ou 2,
**caractérisée en ce qu'**elle contient en outre un ou plusieurs des composants suivants
(Pd) jusqu'à 10 % en poids, de préférence de 3 à 8 % en poids, d'au moins un adjuvant de dispersion et/ou
(Pe) de 0 à 10 % en poids, de préférence de 1 à 5 % en poids, d'un ou plusieurs solvants organiques et/ou
(Pf) de 0 à 10 % en poids, de préférence de 2 à 4 % en poids, d'un ou plusieurs liants différents du polyuréthanne (P) (par rapport aux matières solides) et/ou
(Pg) de 0 à 20 % en poids, de préférence de 2 à 10 % en poids, d'une ou plusieurs charges et/ou d'un ou plusieurs extendeurs et/ou
(Ph) de 0 à 15 % en poids, de préférence de 1 à 15 % en poids, d'un ou plusieurs additifs et/ou adjuvants usuels,
les proportions pondérales des composants (Pd) à (Ph) étant de nouveau par rapport chaque fois à la quantité totale de la pâte de pigment respective.

4. Pâte de pigment selon l'une quelconque des revendications 1 à 3, **caractérisée en ce qu'**elle présente une teneur en matières solides de 25 à 85 % en poids, de préférence de 40 à 70 % en poids, et/ou un pH de 7 à 9, de préférence de 7,5 à 8,5, et/ou à une température de 23°C et à une vitesse de cisaillement de 1 000 s⁻¹, une viscosité de 50 à 800 mPa.s, de préférence de 100 à 300 mPa.s.

5. Pâte de pigment selon l'une quelconque des revendications 1 à 4, **caractérisée en ce que** le rapport pigment/liant dans la pâte de pigment est compris entre 5:1 et 0,5:1, de préférence entre 3:1 et 2:1.

6. Peinture à l'eau, **caractérisée en ce qu'**elle contient une ou plusieurs pâtes de pigments selon l'une quelconque des revendications 1 à 5.

7. Peinture à l'eau selon la revendication 6, **caractérisée en ce qu'**elle contient de 10 à 60 % en poids, de préférence de 15 à 30 % en poids, d'au moins une pâte de pigment selon l'une quelconque des revendications 1 à 5.

8. Peinture à l'eau selon la revendication 6 ou 7, **caractérisée en ce qu'**elle contient en tant que liant au moins un polyuréthanne-acrylate (P), éventuellement conjointement avec d'autres liants.

9. Procédé pour l'enduction de subjectiles, **caractérisé en ce qu'**on applique une peinture à l'eau selon l'une quelconque des revendications 6 à 8.

10. Procédé selon la revendication 9, **caractérisé en ce qu'**on utilise la peinture à l'eau selon l'une quelconque des revendications pour la production d'un revêtement de finition, en particulier en tant que peinture de base universelle.

11. Utilisation des pâtes de pigments selon l'une quelconque des revendications 1 à 5, pour la production de peintures à l'eau pour le revêtement de carrosseries d'automobiles, en particulier dans le domaine du peinturage en série.

12. Utilisation des pâtes de pigments selon l'une quelconque des revendications 1 à 5, pour la production de peintures durcissables par irradiation.

13. Système mixte pour la production de revêtements aqueux, **caractérisé en ce que** le système mixte contient plusieurs pâtes de pigments selon l'une quelconque des revendications 1 à 5.
